# EUROPÄISCHE PATENTANMELDUNG

(11) **EP 3 686 705 A1**
(43) Veröffentlichungstag der Anmeldung: **29.07.2020**
(21) Anmeldenummer: 19153744.8
(22) Anmeldetag: 25.01.2019
(51) Int. Cl.: G05D 1/02, G05B 19/418, B25J 9/16

(54) **ROBOTER UND VERFAHREN ZUR STEUERUNG EINES MOBILEN ROBOTERS IN EINEM RAUM**

(71) Anmelder: Siemens Aktiengesellschaft, 80333 München (DE)
(72) Erfinder: Mayer, Hermann Georg, 83209 Prien am Chiemsee (DE)

(57) **Zusammenfassung**

Die Erfindung betrifft ein Verfahren zur Steuerung eines mobilen Roboters (1) in einem Raum (R), umfassend die Schritte:
- Bereitstellung oder Erzeugung eines Bewegungsdatensatzes (BD) für den Roboter (1) umfassend Positionsdaten (PD) einer Trajektorie (T), und Geschwindigkeitsdaten (GD) eines Geschwindigkeitsprofils mit dem sich der Roboter (1) entlang der Trajektorie (T) bewegen soll,
- Positionierung des Roboters (1) in dem Raum (R), wobei der Roboter (1) eine Sensoreinheit (2) umfasst, die dazu ausgelegt ist, einen Parameter des Raumes (R) zu messen,
- Bereitstellung oder Erzeugung von Referenzdaten (RD) umfassend Informationen zu Sensordaten (SD), wie sie von der Sensoreinheit (2) bei Bewegung des Roboters (1) mit dem Geschwindigkeitsprofil des Bewegungsdatensatzes (BD) entlang der Trajektorie (T) aufgenommen würden,
- Aufnahme von Sensordaten (SD) mittels einer Sensoreinheit (2) des Roboters (1),
- Berechnung eines Korrekturvektors (KV) aus dem Unterschied von Sensordaten (SD) und Referenzdaten (RD),
- Bewegung des Roboters (1) entlang des Korrekturvektors (KV) und/oder zur nächsten durch die Positionsdaten (PD) definierten Position der Trajektorie (T),
- Wiederholung der Aufnahme von Sensordaten (SD), der Berechnung eines Korrekturvektors (KV) und der Bewegung des Roboters (1).

Die Erfindung betrifft darüber hinaus einen entsprechenden Roboter.

## Beschreibung

Die Erfindung betrifft einen Roboter und ein Verfahren zur Steuerung eines mobilen Roboters in einem Raum.

Roboter sind seit langem Teil der allgemeinen Technik. Sie werden oft zur Fertigung oder zum Transport von Gegenständen verwendet. Oftmals werden Robotersysteme dazu nicht durch die direkte Eingabe von Befehlen programmiert, sondern mittels eines sogenannten "Teach-In". Die ursprünglich englische Bezeichnung "Teach-In" (was etwa mit "Einlernen" oder "Anlernen" übersetzt werden könnte) wird auch im Deutschen verwendet und bezeichnet ein Verfahren zur Programmierung eines Roboters.

Im Rahmen eines Teach-In wird der Roboter durch ein Handbediengerät an die gewünschte Position gefahren und ggf. eine bestimmte weitere Aktion durchgeführt (z.B. ein Schweißpunkt gesetzt). Die so durchgeführten Aktionen werden in einer Speichereinheit des Roboters abgespeichert und können nun beliebig oft wiederholt werden (z.B. für jede produzierte Einheit im Karosserie-Rohbau). Das Verfahren funktioniert insbesondere bei Industrierobotern deswegen so gut, weil diese über eine hohe Wiederholgenauigkeit verfügen und ihre Bewegungsparameter in der Regel durch keine unbekannten oder schwer messbaren Störgrößen beeinflusst werden.

Anders verhält es sich jedoch bei Robotern, deren Positioniergenauigkeit Störungen wie z.B. Reibung, Schlupf bzw. fehlender Traktion unterworfen ist. Insbesondere bei mobilen Robotern, z.B. sogenannten "AGV"s (AGV: "Automated Guided Vehicle" = fahrerloses Transportfahrzeug), muss mit entsprechende Störeinflüssen gerechnet werden, so dass ein direktes Teach-In über die Wiederholung einer vorgegebenen Bewegung zu ungenau wäre. Dies stellt einen gravierenden Nachteil bei der Programmierung von mobilen Robotern dar.

Beispielsweise kann bei einem AGV, welches mit einem Roboterarm bestückt ist, der Roboterarm durch einen Bediener ohne Programmiererfahrung mittels eines Teach-In programmiert werden, wohingegen für die Programmierung der mobilen Plattform des AGV in der Regel weitergehende Programmierkenntnisse nötig sind. Durch diesen Technologiebruch wird deren Einsatz in flexiblen Produktionsprozessen erschwert, da ein schnelles Ändern der programmierten Aufgabe ohne Weiteres nicht möglich ist.

Bisher folgen autonome Transportsysteme oft nur fest vorgegebenen Pfaden. Die Pfade werden dabei durch Begrenzungskabel (Induktionsschleifen wie z.B. bei autonomen Rasenmähern) oder über optische Marker definiert. Eine entsprechende Umrüstung der Anlage auf andere Pfade ist aufgrund der Markier- bzw. Umbauarbeiten zeitaufwändig und teuer.

Daneben existieren weitere komplexe Ansätze für die Programmierung bzw. vollautonome Betriebsmodi, die in industriellen Anlagen oft nicht umsetzbar sind, da entsprechend fachkundiges Bedienpersonal fehlt oder die Verfahren zu fehleranfällig sind. Entsprechende Verfahren werden z.B. bei Staubsaugrobotern eingesetzt, da es dabei nicht auf eine hohe Präzision ankommt und der durchzuführende Prozess in der Regel sehr fehlertolerant ist. Entsprechende Voraussetzungen sind jedoch bei industriellen autonomen Transportaufgaben in der Regel nicht gegeben.

Es ist eine Aufgabe der vorliegenden Erfindung, ein alternatives, komfortableres Verfahren zur Steuerung eines Roboters sowie einen entsprechenden Roboter anzugeben, mit dem die oben beschriebenen Nachteile vermieden werden. Insbesondere ist es eine Aufgabe der vorliegenden Erfindung, das Programmieren von mobilen Robotern zu vereinfachen und zu vereinheitlichen.

Diese Aufgabe wird durch ein Verfahren gemäß Patentanspruch 1 und einen Roboter gemäß Patentanspruch 10 gelöst.

Das erfindungsgemäße Verfahren zur Steuerung eines mobilen Roboters in einem Raum, umfasst die folgenden Schritte:
- Bereitstellung oder Erzeugung eines Bewegungsdatensatzes für den Roboter umfassend Positionsdaten einer Trajektorie, und Geschwindigkeitsdaten eines Geschwindigkeitsprofils mit dem sich der Roboter entlang der Trajektorie bewegen soll. Eine Trajektorie (oft auch "Bahnkurve", "Pfad" oder "Weg" genannt) bezeichnet hier den Verlauf einer Raumkurve, entlang der sich der Roboter bewegen soll. Die Positionsdaten geben den Verlauf der Trajektorie wieder. Die Geschwindigkeitsdaten erlauben eine Einhaltung des genauen zeitlichen Ablaufs der Bewegung des Roboters entlang der Trajektorie.

Die Geschwindigkeitsdaten können direkte Geschwindigkeiten des Roboters an bestimmten Positionen der Trajektorie angeben. Sie können aber auch Informationen bereitstellen, aus denen sie eine Geschwindigkeit ableiten lässt. Beispielsweise kann ein Geschwindigkeitsprofil des Roboters auch durch Zeitdaten zu den einzelnen Positionsdaten definiert sein (z.B. "zweiter Wegpunkt nach 3 Sekunden erreichen"). Da aus diesen Zeitdaten ein Geschwindigkeitsprofil abgeleitet werden kann, werden diese hier auch als Geschwindigkeitsdaten angesehen.

Die Positionsdaten und Geschwindigkeitsdaten können erzeugt werden (z.B. mittels eines Teach-In Verfahrens wie im Folgenden noch genauer ausgeführt wird), sie können aber auch bereits vorliegen, z.B. wenn ein Roboter bereits mittels eines Teach-In programmiert wurde und ein zweiter Roboter eine identische Programmierung erhalten soll. Es kann auch der Fall vorliegen, dass ein Training in einer virtuellen Umgebung stattfand und die daraus erhaltenen Positionsdaten und Geschwindigkeitsdaten nun für das Verfahren in der Realität bereitgestellt werden.
- Positionierung des Roboters in dem Raum, insbesondere in der Nähe der Trajektorie. Der Roboter umfasst dabei eine Sensoreinheit, welche dazu ausgelegt ist, einen Parameter des Raumes zu messen und dadurch die Sensordaten liefert. Diese Sensoreinheit umfasst bevorzugt mindestens einen Sensor der Gruppe Abstandsensoren (z.B. Laserscanner, Ultraschallsensoren, Time-of-Flight-Sensoren), Kameras, Sensoren zur Funktriangulation (z.B. Signale von WLAN-, Mobilfunk- oder Bluetooth-Sendern nutzend), 3D-Laserscanner, Sensoren zum optischen Feature-Tracking und Sensoren zur Magnetfeldmessung (z.B. Hall-Sensoren).

Es ist vom Vorteil, wenn die Sensoreinheit dazu ausgelegt ist, einen Parameter des Raumes zu messen, der spezifisch für eine Position des Roboters ist. Jedoch ist dies nicht unbedingt notwendig, sofern zumindest ein Parameter gemessen wird, der den Zustand der Umgebung der Position des Roboters wiedergibt und/oder einen Parameter mit in dem Raum inhomogenen Werten gemessen wird. Es ist bevorzugt, dass die Sensoreinheit dazu ausgestaltet ist, eine Gradienteninformation zur Verfügung zu stellen. Bevorzugt ist die Sensoreinheit dazu ausgelegt, einen Parameter zu messen, der sich bei Bewegung des Roboters ändert und insbesondere ebenfalls ändert, wenn der Raum eine Änderung erfährt (z.B. ein Element des Raumes umgestellt wird, was sowohl eine lokale Änderung von elektrischen, magnetischen bzw. elektromagnetischen Feldern hervorruft als auch eine Änderung von gemessenen Konturen in der Nähe dieses Elements oder des Ortes, wo dieses Element vorher stand). Bevorzugt ist die Sensoreinheit dazu ausgestaltet Forminformationen über Konturen der Umgebung des Roboters als Sensordaten anzugeben.

Beispielsweise könnte ein Teach-In mit einem Roboter durchgeführt werden, der einen 2D Laserscanner als Sensoreinheit aufweist. Im Grunde kann das Verfahren aber mit jedem Sensor durchgeführt werden, der eine Gradienteninformation bereitstellt.
- Bereitstellung oder Erzeugung von Referenzdaten umfassend Informationen zu Sensordaten, wie sie von der Sensoreinheit bei Bewegung des Roboters mit dem Geschwindigkeitsprofil des Bewegungsdatensatzes entlang der Trajektorie aufgenommen würden. Diese Referenzdaten geben also wieder, was der Roboter bei Befahren der Trajektorie mit seiner Sensoreinheit messen würde und sind mit Positionsdaten verknüpft. Die Verknüpfung gibt an, an welchem Punkt der Trajektorie welche Referenzdaten gelten sollen.

Diese Referenzdaten werden bevorzugt bei einem Teach-In aus Sensordaten erzeugt (z.B. einfach durch Abspeichern der Sensordaten). Alternativ ist auch bevorzugt, die Referenzdaten zu simulieren (z.B. mittels eines BIM Modells, von engl. "Building Information Modeling", zu Deutsch "Bauwerksdatenmodellierung"). Letztlich ist aber auch bevorzugt, zu einer bekannten Trajektorie bereits vorhandene Referenzdaten aus einem Datenspeicher zu laden.
- Aufnahme von Sensordaten mittels der Sensoreinheit des Roboters. Es wird an dieser Stelle angemerkt, dass die Referenzdaten und die Sensordaten selbstverständlich miteinander vergleichbar sein müssen bzw. die gleiche "Natur" haben müssen. Es hat keinen Sinn, als Referenzdaten Daten zu einem magnetischen Feld zur Verfügung zu stellen und als Sensordaten Konturdaten der Umgebung. Dieser Umstand ist jedoch bereits durch die vorgenannte Forderung erfüllt, dass die Referenzdaten Informationen zu Sensordaten umfassen, wie sie von der Sensoreinheit bei Bewegung des Roboters mit dem Geschwindigkeitsprofil des Bewegungsdatensatzes entlang der Trajektorie aufgenommen würden.
- Berechnung eines Korrekturvektors aus dem Unterschied von Sensordaten und Referenzdaten. Dieser Korrekturvektor gibt an, wohin sich der Roboter bewegen müsste, um auf die Trajektorie zu gelangen. Entspricht der Korrekturvektor einem Nullvektor (wobei auch geringe Korrekturvektoren als Nullvektoren angesehen werden könnten), befindet sich der Roboter auf der Trajektorie.

Bevorzugt werden dabei eine Ist-Position (z.B. aus den Sensordaten und ggf. den Referenzdaten) und eine Soll-Position (aus den Positionsdaten und/oder Referenzdaten) berechnet und der Korrekturvektor als Bewegungsvektor von der Ist-Position in Richtung der Soll-Position bestimmt. Dazu wird insbesondere zwischen einer ermittelten Ist-Position und einer Soll-Position ein Korrekturterm abgeleitet, der dann in Bewegungsparameter umgerechnet wird. Ein Beispiel dafür wäre die optische Erkennung eines Markers. Wenn dieser in der Bewegungsebene verschoben dargestellt wird kann man den Roboter drehen, bis Soll und Ist übereinstimmen. Entsprechend kann man näher heranfahren, wenn der Marker im Ist-Bild zu klein dargestellt wird oder wegfahren, wenn der Marker im Ist-Bild zu groß dargestellt wird.
- Bewegung des Roboters entlang des Korrekturvektors und/oder zur nächsten durch die Positionsdaten definierten Position der Trajektorie (letzteres insbesondere, wenn der Korrekturvektor ein Nullvektor bzw. sehr klein ist). Die Bewegung sollte dabei mit einem bestimmten Geschwindigkeitsprofil erfolgen, wie es an dem betreffenden Abschnitt der Trajektorie durch die Geschwindigkeitsdaten vorgegeben ist.

Hier wird angemerkt, dass zu Beginn des Verfahrens die Trajektorie vielleicht zunächst gesucht werden muss. In diesem Fall hat das Befahren der Trajektorie naturgemäß wenig Sinn. Wenn die Trajektorie hingegen gefunden wurde (oder die Startposition korrekt war), kann die Trajektorie ohne weiteres befahren werden. Bei Abweichungen von der Trajektorie kann die Fahrt mit den Bewegungsdaten fortgesetzt werden, wobei der Korrekturvektor (der zusätzlich zu den Bewegungsdaten wirkt) die Abweichung kompensiert. Es wird hieraus klar, dass die Positionsdaten in den Bewegungsdaten als Wegpunkte auf der Trajektorie in der gewünschten Bewegungsrichtung geordnet sein sollten. Bevorzugt werden diese Wegpunkte bei der Bewegung des Roboters auf der Trajektorie nacheinander abgearbeitet. Bei einer Abweichung vom Weg, z.B. aufgrund fehlender Traktion des Roboters, wird bevorzugt aus den Positionsdaten des nächsten Wegpunktes bzw. den Referenzdaten, die mit diesem Wegpunkt verknüpft sind, eine Sollposition berechnet und der Roboter zu diesem Wegpunkt geführt.
- Wiederholung der Aufnahme von Sensordaten, der Berechnung eines Korrekturvektors und der Bewegung des Roboters. Das Verfahren sollte zumindest so lange wiederholt werden, bis der Endpunkt der Trajektorie erreicht worden ist.

Ein erfindungsgemäßer Roboter ist zur Durchführung eines Verfahrens gemäß einem der vorangehenden Ansprüche ausgelegt und umfasst die folgenden Komponenten:
- Einen Datenspeicher zur Aufnahme eines Bewegungsdatensatzes für den Roboter umfassend Positionsdaten einer Trajektorie, und Geschwindigkeitsdaten eines Geschwindigkeitsprofils mit dem sich der Roboter entlang der Trajektorie bewegen soll.
- Eine Sensoreinheit, die dazu ausgelegt ist, einen Parameter des Raumes zu messen und Sensordaten aufzunehmen.
- Einen Datenspeicher zur Aufnahme von Referenzdaten umfassend Informationen zu Sensordaten, wie sie von der Sensoreinheit bei Bewegung des Roboters mit dem Geschwindigkeitsprofil des Bewegungsdatensatzes entlang der Trajektorie aufgenommen würden. Dieser Datenspeicher kann in derselben Datenspeichereinheit liegen wie der vorgenannte.
- Eine Steuereinheit ausgelegt zur Berechnung eines Korrekturvektors aus dem Unterschied von Sensordaten und Referenzdaten.
- Eine Bewegungseinheit ausgelegt zur Bewegung des Roboters entlang des Korrekturvektors und/oder zur nächsten durch die Positionsdaten definierten Position der Trajektorie.

Es sollte beachtet werden, dass der primäre Sinn des Verfahrens bzw. des Roboters nicht darin liegt, einer vorbestimmten Trajektorie nachzufolgen (dies ist hinlänglich bekannt), sondern die aktuelle Position des Roboters in einem Raum und auf einer Trajektorie möglichst genau zu bestimmen und Fehler in der Bewegung des Roboters zu korrigieren.

Ein Großteil der zuvor genannten Komponenten des Roboters, kann ganz oder teilweise in Form von Softwaremodulen in einem Prozessor einer Steuereinheit des Roboters realisiert werden. Eine weitgehend softwaremäßige Realisierung hat den Vorteil, dass auch schon bisher verwendete Roboter auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines Roboters ladbar ist, mit Programmabschnitten, um alle Schritte des erfindungsgemäßen Verfahrens auszuführen, wenn das Programm in dem der Steuereinheit des Roboters ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zum Roboter und/oder zur Speicherung an oder in der Speichereinrichtung kann ein computerlesbares Medium, beispielsweise ein Memorystick, eine Festplatte oder ein sonstiger transportabler oder fest eingebauter Datenträger dienen, auf welchem die von einer Steuereinheit des Roboters einlesbaren und ausführbaren Programmabschnitte des Computerprogramms gespeichert sind. Die Steuereinheit kann z.B. hierzu einen oder mehrere zusammenarbeitende Mikroprozessoren oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die Bereitstellung oder Erzeugung des Bewegungsdatensatzes für den Roboter wird bevorzugt mittels eines sogenannten "Teach-In" erreicht. Der Roboter umfasst dazu bevorzugt eine Datenschnittstelle zur Kommunikation mit einer Steuerkonsole und ist zur Programmierung mittels eines Teach-In ausgelegt. Der Bewegungsdatensatz wird dabei bevorzugt durch Führung des Roboters entlang einer Trajektorie erzeugt. Bevorzugt fährt dazu ein Programmierer den Roboter mit einer Steuerkonsole entlang der gewünschte Trajektorie. Diese Trajektorie wird mit ihren Positionsdaten und den während der Programmierung vorliegenden Geschwindigkeitsdaten abgespeichert. Das Teach-In wird insbesondere so lange durchgeführt, bzw. die Führung des Roboters so lange wiederholt, bis ein gewünschter Arbeitszyklus durchlaufen ist. Der Roboter wird also bevorzugt manuell von einem Programmierer mit einem bestimmten Geschwindigkeitsprofil entlang einer Trajektorie bewegt und das Geschwindigkeitsprofil in Form von Geschwindigkeitsdaten und die Trajektorie in Form von Positionsdaten abgespeichert.

Je nach Anwendung kann auch bevorzugt sein, das Teach-In innerhalb einer simulierten Umgebung mit einem simulierten Roboter durchzuführen und den dadurch erzeugten Bewegungsdatensatz dem Verfahren bereitzustellen. Hier ist auch der Vorteil einer nachträglichen Bearbeitung von aufgezeichneten Trajektorien (z.B. aufgrund von einem geänderten BIM Modell) zu nennen. Damit lassen sich dann Ungenauigkeiten in einer Simulation verglichen mit der Realität kompensieren und zumindest relative Veränderungen vornehmen, z.B. Verschiebung einer aufgezeichneten Säule.

In dem Fall, dass mehrere Roboter identische Trajektorien mit identischen Geschwindigkeitsprofilen durchlaufen sollen, kann auch ein einziger Bewegungsdatensatz erzeugt werden und den betreffenden Robotern zur Verfügung gestellt werden (z.B. durch Kopieren des ursprünglichen Bewegungsdatensatzes). Dazu ist bevorzugt, dass sich die Sensoren der Roboter identisch verhalten oder entsprechende Abweichungen toleriert werden können.

Bevorzugt werden im Rahmen des Bewegungsdatensatzes auch Beschleunigungsdaten zu einem Beschleunigungsprofil des Roboters bereitgestellt oder erzeugt. Der Bewegungsdatensatz umfasst also dann auch Beschleunigungsdaten zu einem Beschleunigungsprofil, mit dem sich der Roboter entlang der Trajektorie bewegen soll. Dies kann zwar zumindest dann entfallen, wenn die Beschleunigung des Roboters vorbestimmt ist, bzw. die Geschwindigkeitsdaten differenzierbar sind (im Sinne einer mathematischen zeitlichen Ableitung), die zusätzlichen Beschleunigungsdaten haben jedoch den Vorteil, dass eine genauere zeitliche Führung des Roboters ermöglicht wird.

Bevorzugt erfolgt im Rahmen der Bereitstellung oder Erzeugung von Referenzdaten eine Aufnahme und Speicherung von Sensordaten als Referenzdaten. Dies erfolgt bevorzugt während einer Führung des Roboters entlang der Trajektorie, z.B. während eines Teach-In wie vorangehend beschrieben.

Bevorzugt werden im Rahmen der Aufnahme von Sensordaten Forminformationen über Konturen der Umgebung des Roboters und/oder Bildinformationen über die Umgebung des Roboters aufgenommen. Diese Forminformationen sind bevorzugt Forminformationen über Konturen von raumbegrenzenden Elementen wie z.B. Wände, Fenster, Türen, Tragestrukturen (wie z.B. Regale), Haltestrukturen oder Strukturen an der Decke bzw. dem Boden. Die Bildinformationen sind bevorzugt Bildinformationen zu Markern, z.B. Mustern aus Linien, geometrischen Formen und/oder Punkten. Generell könnte ein (inhomogener) optischer Fluss, basierend auf Rohdaten einer Kamera gemessen werden.

Es sollte dabei darauf geachtet werden, dass der Raum bezüglich der eingesetzten Sensorik unterschiedliche Strukturen aufweist (z.B. nicht ausschließlich weiße Wand bei ausschließlichem Einsatz von Kameras). Sollte dies der Fall sein, wäre es vorteilhaft vor Anwendung des Verfahrens zumindest im Bereich der gewünschten Trajektorie für die Sensoreinheit messbare Inhomogenitäten im Umfeld der Trajektorie zu schaffen, z.B. Marker bzw. andere künstliche Features anzubringen.

Bevorzugt werden im Rahmen der Aufnahme von Sensordaten weitere Messdaten durch Sensoren des Roboters aufgenommen, die anderer Natur sind als die Referenzdaten. Dies können z.B. GPS-Daten sein oder Daten zu der Situation hinter dem Roboter. Diese Messdaten werden bevorzugt zur Ermittlung einer (zumeist groben) Ist-Position des Roboters verwendet. Dies hat den Vorteil, dass eine initiale genaue Positionierung des Roboters in der direkten Nähe der Trajektorie nicht unbedingt notwendig ist, da er mittels z.B. GPS-Daten alleine den Weg dorthin finden könnte. Dass die GPS-Daten vergleichsweise ungenau sind, ist dabei unerheblich, da durch das Verfahren eine genaue Positionierung des Roboters auf der Trajektorie erreicht werden kann.

Bevorzugt wird im Rahmen der Berechnung eines Korrekturvektors eine Ist-Position des Roboters ermittelt. Dies kann z.B. dadurch geschehen, dass die Trajektorie einmal von dem Roboter erreicht wurde (der Korrekturvektor also null oder minimal ist) und diese Position als Ist-Position angesehen wird. Dies kann aber auch z.B. dadurch geschehen, dass der von der Sensoreinheit gemessene Parameter eindeutige Zuordnungen zu Raumkoordinaten zulässt und die Ist-Position direkt aus den Sensordaten abgeleitet werden kann (z.B. mittels einer Triangulation).

Die Referenzdaten sind wie oben gesagt mit Positionsdaten der Trajektorie verknüpft, also mit bestimmten Punkten bzw. einem Abschnitt der Trajektorie (insbesondere, wenn mehrere Sätze der Referenzdaten betrachtet werden). Im Rahmen einer nachfolgenden Wiederholung wird dann ein Vergleich der Sensordaten mit Referenzdaten durchgeführt, welche mit dem nächstgelegenen Abschnitt der Trajektorie zu der Ist-Position verknüpft sind. Die Sensordaten werden also nur mit einem Teil der Referenzdaten verglichen, was zum einen eine schnellere Berechnung erlaubt, zum anderen auch eine Verminderung von Fehlern erreicht wird, da Redundanzen verringert werden.

Beispielsweise kann es in einer Fabrikumgebung durchaus vorkommen, dass der Raum an unterschiedlichen Stellen identisch geformt ist, z.B. bei regelmäßigen Regalreihen. Würde die Trajektorie an mehreren dieser Stellen vorbeikommen, könnte es sein, dass es identische Sätze von Referenzdaten gibt, die mit unterschiedlichen Punkten der Trajektorie verknüpft sind. Würden die Sensordaten stets mit allen Referenzdaten verglichen, könnte der Fall auftreten, dass mehrere Positionen möglich erscheinen. In der Praxis ist es zumeist so, dass der Roboter sich nur ein (vergleichsweise) kleines Stück bewegt und dann der nächste Korrekturvektor berechnet wird. Er kann also nicht in weit entfernte Bereiche (mit identischen Formungen des Raumes) gefahren sein und es muss damit auch kein Vergleich mit Referenzdaten aus diesen weit entfernten Bereichen vorgenommen werden. Hier sollte aber bedacht werden, dass der (unwahrscheinliche) Fall auftreten könnte, dass dieser Roboter während seiner Bewegung durch ein Transportmittel an einen anderen Ort verbracht worden sein könnte. Hier kann aber die Verwendung weiterer Daten, z.B. einem GPS-Signal, Abhilfe schaffen. Dieses gibt zwar nur eine grobe Ahnung über die genaue Position des Roboters, die feinere würde aber stets mittels des Korrekturvektors ermittelt werden können.

Entspricht die Ist-Position einer Position auf der Trajektorie müsste eigentlich nur diejenigen Referenzdaten betrachtet werden, die mit dem nächsten nachfolgenden Punkt der Trajektorie (in Fahrtrichtung des Roboters) verknüpft sind. Diesen Punkt gilt es als nächstes zu erreichen und daher könnten die Sensordaten so lange nur mit diesem kleinen Satz von Referenzdaten verglichen werden. Es ist aber hier von Vorteil, wenn auch Referenzdaten von benachbarten Punkten der Trajektorie für den Vergleich verwendet werden (auch hinter dem Roboter liegende), da auf diese Weise ermittelt werden kann, ob der Roboter sich durch widrige Umstände gedreht hat oder über den nächstgelegenen Wegpunkt "hinausgeschossen" ist.

Es ist besonders bevorzugt, dass zeitlich früher im Rahmen des Verfahrens aufgenommene Sensordaten ebenfalls zur Berechnung des Korrekturvektors verwendet werden. Dies ist insbesondere von Vorteil, wenn diese Daten dazu verwendet werden, statistische Fehler zu minimieren und/oder Redundanzen aufzulösen. So können z.B. Sensordaten zu Kontouren im Umfeld des Roboters dahingehend untersucht werden, ob diese sich mit der vorangegangenen Bewegung des Roboters und den vorher aufgenommenen Sensordaten zu Konturen im Umfeld der alten Position stimmiger mit den Referenzdaten vergleichen lassen. Hierzu kann bevorzugt das Prinzip des "slidig window" verwendet werden, also das Schieben eines "Fensters" betreffend die betrachteten Referenzdaten über die Gesamtmenge der Referenzdaten.

Bevorzugt werden die Sensordaten auf das Vorliegen einer Änderung der Struktur des Raumes überprüft. Dies kann beispielsweise dadurch geschehen, dass bei einer Aufnahme von Formdaten von Konturen des umgebenden Raumes festgestellt wird, dass Teile der Sensordaten mit den Referenzdaten gut übereinstimmen jedoch aus einem klar definierten Raumbereich abweichende Werte gemessen worden sind, die insbesondere nach einer Bewegung des Roboters in dem betreffenden Raumbereich verweilen.

Im positiven Fall kann der Roboter angehalten werden und warten, bis die Störung (vielleicht ein Mensch oder ein Fahrzeug) nicht mehr vorliegt. Es ist aber bevorzugt, insbesondere in dem Fall, dass die Abweichung als statisch erkannt worden ist, diese als Änderung des Raumes aufzufassen. In diesem Fall werden bevorzugt Sensordaten, die an einem Punkt der Trajektorie aufgenommen wurden (mit der Störung), als neue mit den entsprechenden Positionsdaten an diesem Punkt der Trajektorie verknüpfte Referenzdaten abgespeichert. Damit wäre die Änderung im Raum nun in den Referenzdaten enthalten.

Die Referenzdaten können aber bevorzugt auch dynamische Aspekte enthalten. So könnten die Sensoren während des Teach-In z.B. einen sich bewegenden Ventilator aufnehmen (und diese Bewegung durch Änderung zweier aufeinanderfolgender Sätze von Sensordaten auch als solche erkennen). Wenn der Ventilator später stillsteht oder eine andere Drehzahl aufweist, so könnte das Verfahren aus Sicherheitsgründen abgebrochen werden. Es könnte auch dieser Raumbereich als dynamischer Bereich angesehen und aus der Berechnung des Korrekturvektors ausgenommen werden. Es ist beim Teach-In bevorzugt, dass sich keine Personen im Sensorbereich des Roboters befinden, damit die Anzahl von unklaren Raumbereichen minimiert wird.

Bei mehreren Robotern, die sich gegenseitig nahekommen können oder sogar sich gegenseitig überkreuzenden Trajektorien folgen, könnte im einfachsten Fall abgewartet werden, bis eine Störung in den Sensordaten wieder verschwunden ist. Falls die Pfade der anderen Roboter bekannt sind, könnte eine zu erwartende Störung der Sensoraufnahmen vorausberechnet werden und in die Berechnung des Korrekturvektors eingeplant werden.

Bevorzugt versucht der Roboter im Rahmen der Wiederholung der Schritte des erfindungsgemäßen Verfahrens zunächst, sich mit der vorgegebenen Trajektorie zu synchronisieren. Dies geschieht indem durch Abfahren entlang des Korrekturvektors der Roboter sich der Trajektorie immer weiter annähert, bevorzugt in dem der Unterschied zwischen gemessener Kontur (Sensordaten) und gespeicherter Kontur (Referenzdaten) minimiert wird. Hat der Roboter die Trajektorie (insbesondere ihren Beginn) erreicht, werden bevorzugt die Referenzdaten in ihrer Abfolge entlang der Trajektorie abgerufen und dienen zur Berechnung des Korrekturvektors.

Bevorzugt werden die Positionen des Fahrzeuges anhand der gespeicherten Konturen im Modell bestimmt und die entsprechenden Ableitungen von der Position mit Hilfe des Zeitstempels der Konturen gebildet.

Der Abstand der Punkte, welche die Trajektorie definieren (also der Positionsdaten) sollte dabei so klein gewählt werden, dass kein unstetiger Bewegungsübergang entsteht. Dies kann ggf. durch eine vorausgehende Glättung oder polynomielle Approximation der Konturübergänge erreicht werden.

Bevorzugt umfasst der Roboter eine Datenschnittstelle zur Kommunikation mit einer Steuerkonsole und ist zur Programmierung mittels eines Teach-In ausgelegt.

Bevorzugt ist die Sensoreinheit des Roboters dazu ausgelegt, einen Parameter des Raumes zu messen, der den Zustand der Umgebung der Position des Roboters wiedergibt und/oder einen Parameter mit im Raum inhomogenen Werten wiedergibt, und/oder wobei die Sensoreinheit dazu ausgelegt ist, einen Parameter zu messen, der sich bei Bewegung des Roboters ändert und insbesondere ebenfalls ändert, wenn der Raum eine Änderung erfährt. Dabei ist die Sensoreinheit besonders bevorzugt dazu ausgelegt, Forminformationen über Konturen der Umgebung des Roboters als Sensordaten anzugeben.

Bevorzugt umfasst die Sensoreinheit des Roboters mindestens einen Sensor der Gruppe Abstandssensoren, Kameras, Sensoren zur Funktriangulation, 3D-Laserscanner, Sensoren zum optischen Feature-Tracking und Sensoren zur Magnetfeldmessung.

Der Raum ist bevorzugt ein zumindest teilweise umschlossener Raum (z.B. von Wänden, Türen, Fenster, Tragestrukturen, Haltestrukturen). Größe oder Abschluss des Raums spielt allerdings für das grundsätzliche Prinzip der Erfindung keine Rolle. Vielmehr ist das Verfahren insbesondere für große Räume bzw. für lange Trajektorien besonders vorteilhaft, da Fehler (Abweichen von der Trajektorie) immer lokal anhand der Referenzdaten und Sensordaten korrigiert werden können und sich nicht aufaddieren, was z.B. bei einer Navigation der Fall wäre, die sich auf Fahrzeugparameter beschränkt.

Die Erfindung ist besonders vorteilhaft für fahrbare Roboter, insbesondere für AGVs, jedoch ist sie auch für fliegende oder schwimmende Roboter oder Förderstrukturen anwendbar.

Ein Vorteil der Erfindung ist, dass die Programmierung mobiler Roboter (insbesondere AGVs) sich nahtlos in bereits erprobte und bewährte Inbetriebnahmeprozesse (z.B. Teach-In) einfügt.

Ist der Arbeitszyklus einmal programmiert findet der Roboter im Folgenden die Trajektorie mit dem gespeicherten Bewegungsdatensatz autonom und kann diese (ggf. in einer beliebigen Geschwindigkeitsskalierung) mit einer PTP-Steuerung nachfahren.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: einen Ablaufplan für einen möglichen Ablauf eines erfindungsgemäßen Verfahrens,
- Figur 2: einen erfindungsgemäßen Roboter,
- Figur 3: ein Szenario zur Verdeutlichung des erfindungsgemäßen Verfahrens,
- Figur 4: ein Szenario zur Verdeutlichung des erfindungsgemäßen Verfahrens,
- Figur 5: ein Szenario zur Verdeutlichung des erfindungsgemäßen Verfahrens,
- Figur 6: ein Szenario zur Verdeutlichung des erfindungsgemäßen Verfahrens,
- Figur 7: ein Szenario zur Verdeutlichung des erfindungsgemäßen Verfahrens,
- Figur 8: ein Szenario zur Verdeutlichung des erfindungsgemäßen Verfahrens,
- Figur 9: ein Szenario zur Verdeutlichung des erfindungsgemäßen Verfahrens.

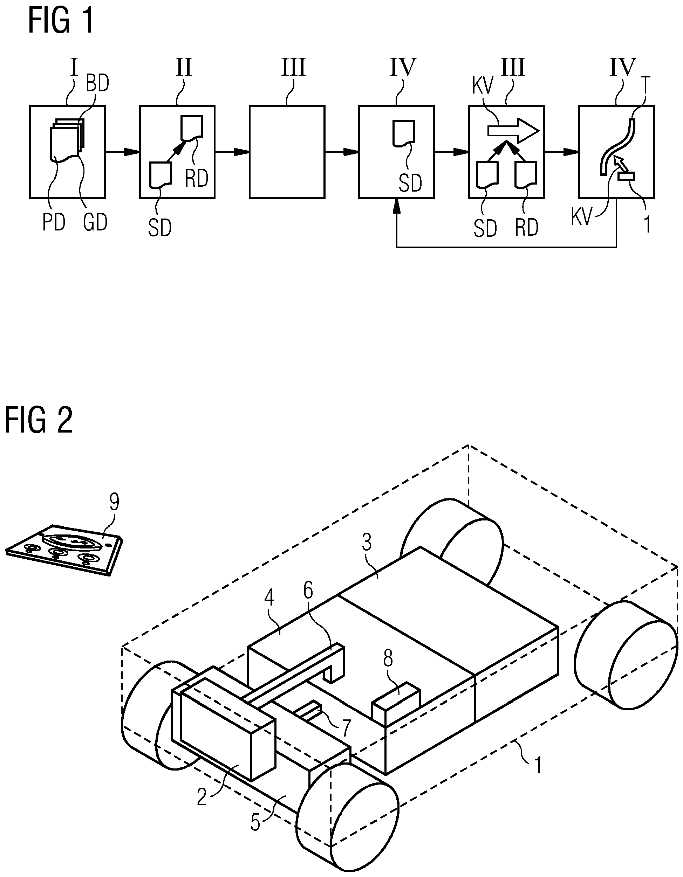

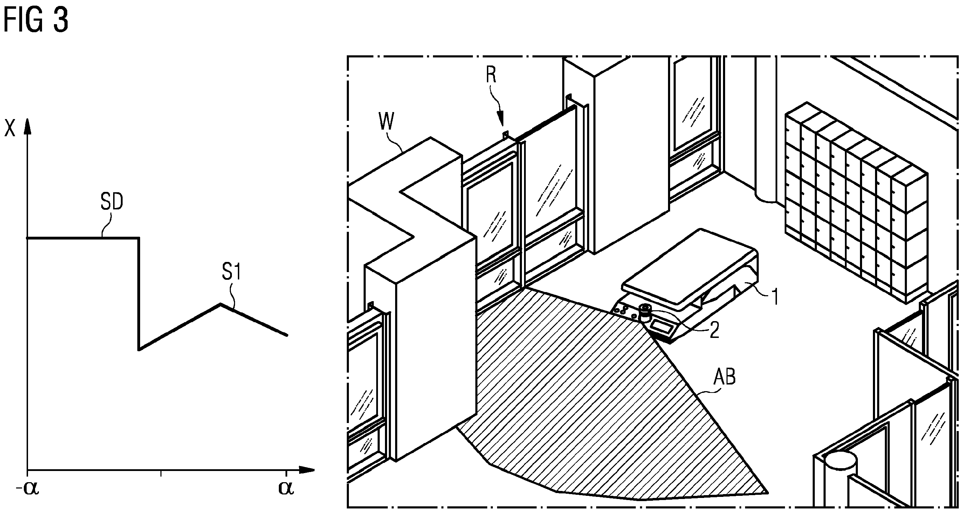

Figur 1 zeigt einen Ablaufplan für einen möglichen Ablauf eines erfindungsgemäßen Verfahrens zur Steuerung eines mobilen Roboters 1 (s. Figur 2) in einem Raum R (s. Figuren 3 bis 9). Der Roboter 1 umfasst dabei eine Sensoreinheit 2 die dazu ausgelegt ist, einen Parameter des Raumes zu messen.

In Schritt I erfolgt eine Erzeugung eines Bewegungsdatensatzes BD für den Roboter 1 umfassend Positionsdaten PD einer Trajektorie T, und Geschwindigkeitsdaten GD eines Geschwindigkeitprofils mit dem sich der Roboter 1 entlang der Trajektorie T bewegen soll. Dies geschieht in diesem Beispiel mittels eines Teach-In, bei dem der Roboter 1 von einem Programmierer entlang der Trajektorie T geführt wird und mit seiner Sensoreinheit 2 Sensordaten SD aufnimmt.

In Schritt II erfolgt eine Erzeugung von Referenzdaten RD aus den besagten Sensordaten SD.

In Schritt III erfolgt eine Positionierung des Roboters 1 in dem Raum R.

In Schritt IV erfolgt eine Aufnahme von Sensordaten SD mittels der Sensoreinheit 2 des Roboters 1.

In Schritt V erfolgt eine Berechnung eines Korrekturvektors KV aus dem Unterschied von Sensordaten SD und Referenzdaten RD.

In Schritt VI erfolgt eine Bewegung des Roboters entlang des Korrekturvektors KV und/oder zur nächsten durch die Positionsdaten PD definierten Position der Trajektorie T.

Danach erfolgt eine Wiederholung der Schritte IV bis VI.

Figur 2 zeigt einen erfindungsgemäßen Roboter 1 ausgelegt zur Durchführung eines erfindungsgemäßen Verfahrens. Der Roboter 1 hat hier vier Räder, von denen zwei von einer Bewegungseinheit 5 angetrieben werden können. Der Roboter 1 umfasst einen Datenspeichereinheit 3 zur Aufnahme eines Bewegungsdatensatzes BD und zum Abspeichern der Referenzdaten RD wie in der vorangehenden Figur geschildert, eine Sensoreinheit 2 zur Aufnahme von Sensordaten SD und eine Steuereinheit 4 ausgelegt zur Berechnung eines Korrekturvektors KV aus dem Unterschied von Sensordaten SD und Referenzdaten RD. Die Steuereinheit 4 ist auch dazu ausgelegt, die Bewegungseinheit 5 so zu steuern, dass sich der Roboter 1 entlang des Korrekturvektors KV und/oder zur nächsten Position der Trajektorie T bewegt.

Die Sensordaten SD gelangen über eine Datenleitung 6 in die Steuereinheit 4 und über eine Steuerleitung 7 kann diese die Bewegungseinheit 5 steuern.

Figur 3 zeigt ein Szenario zur Verdeutlichung des erfindungsgemäßen Verfahrens zur Steuerung eines Roboters 1 in einem Raum R. Der Raum R ist hier mit Wänden W umschlossen, wobei die eingezeichneten Fenster in diesem Beispiel der Einfachheit halber als Wände W aufgefasst werden. Der Roboter 1 hat einen Laserscanner als Sensoreinheit 2 an seiner Vorderseite und ist in dem Raum R positioniert. Als Messbereich der Sensoreinheit 2 ist hier und der schraffierte Bereich von dem Roboter 1 markiert. Dies ist also derjenige Raumbereich, der durch den Laserscanner vermessen wird.

Links neben der Darstellung des Raumes R ist ein Satz S1 von Sensordaten SD skizziert, welche die Distanz X des Roboters zu einer Begrenzung (hier z.B. einer Wand W) in einem Winkelbereich -α, α wiedergibt. Der linke Teil der Kurve der Sensordaten SD verläuft horizontal, da hier die Sensoreinheit 2 kein reflektiertes Signal erhält und z.B. die maximale Distanz X angenommen wird.

Die hier dargestellte Szene kann z.B. den Beginn eines Teach-In oder den Beginn einer erfindungsgemäßen Suche des Roboters 1 nach der korrekten Trajektorie T darstellen. Nach einem Teach-In können die aufgenommenen Sensordaten SD die Referenzdaten RD (s. Figur 1) darstellen. In dem Fall, dass die dargestellte Szene den Beginn eines Teach-Ins darstellt, würden die Sensordaten SD also als Referenzdaten RD abgespeichert werden.

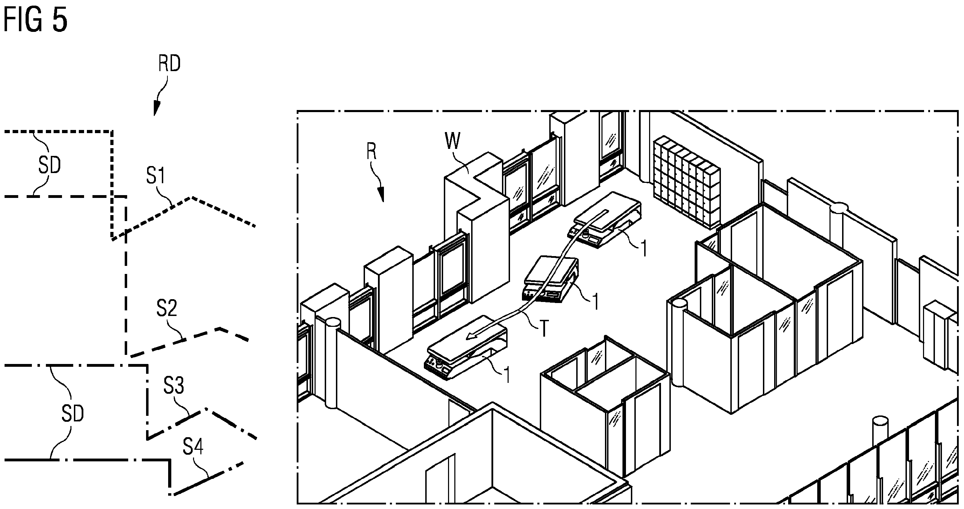

Für ein Teach-In wird der Roboter 1 von einer Startposition aus per Handbedienung entlang einer gewünschten Trajektorie T gefahren (s. Figur 5). Dabei wird wie hier zu sehen die Kontur der Umgebung mit der Sensoreinheit 2 vermessen und die Sensordaten SD in jedem Zeitschritt abgespeichert. Neben der Kontur können auch noch weitere, möglicherweise ungenaue Sensor-Informationen (z.B. ungefähre Position oder ein weiterer Parameter des Raumes R) gemessen und abgespeichert werden. Dies erleichtert es in den nachgelagerten Schritten Mehrdeutigkeiten aufzulösen.

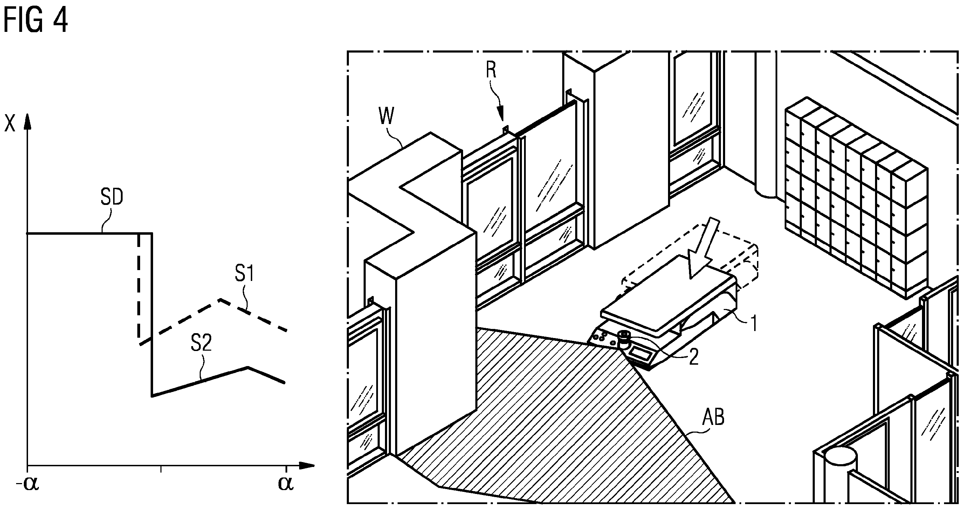

Alternativ können diese Schritte auch virtuell in einem Simulationsszenario durchgeführt werden, dabei könnten je nach der Kalibrierung der Sensoreinheit jedoch die berechneten Sensordaten SD ggf. von den später gemessenen abweichen. Figur 4 zeigt aufbauend auf Figur 3 eine Szene, bei der sich der Roboter 1 ein Stück bewegt hat. Damit ist er näher an die Wand W vor ihm herangekommen und die Sensoreinheit 2 liefert einen weiteren Satz S2 von Sensordaten SD, der links dargestellt ist. Zum Vergleich ist der erste Satz S1 von Sensordaten SD aus Figur 3 gestrichelt gezeigt.

Wäre der erste Satz S1 von Sensordaten SD zu einem Zeitpunkt t0 aufgenommen worden und hätte sich der Roboter eine Zeit dt lang bewegt, so sollte der zweite Satz S2 von Sensordaten einem Zeitpunkt t1 = t0+dt zugeordnet werden.

Figur 5 zeigt ein Szenario, bei dem der Roboter 1 längs einer Trajektorie T durch den Raum R gefahren ist. Dabei wurden mehrere Sätze S1, S2, S3, S4 von Sensordaten SD aufgenommen, wie in den Figuren 3 und 4 beschrieben wurde. Diese Sätze S1, S2, S3, S4 sind untereinander auf der linken Seite dargestellt und können im Zuge eines Teach-Ins als Referenzdaten bezeichnet werden, da sie alle von der Trajektorie T aus aufgenommen worden sind.

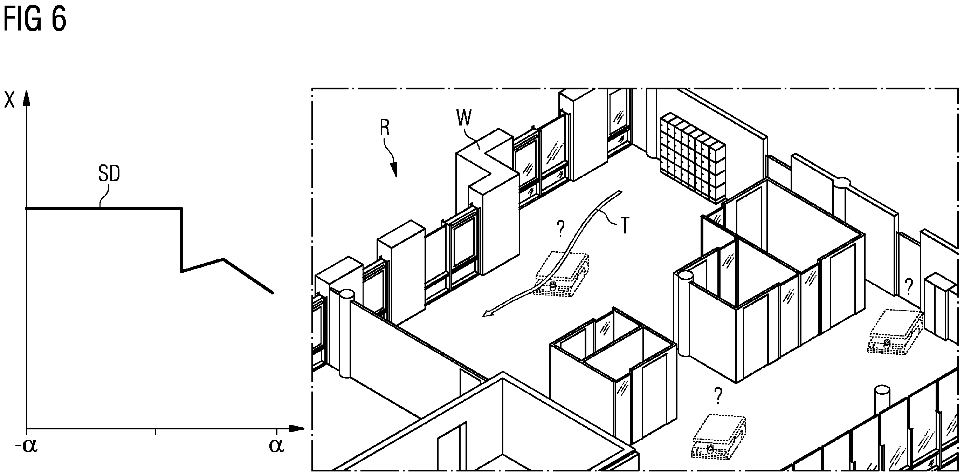

Figur 6 zeigt eine Szene, bei der die Sensoreinheit 2 eines Roboters 1 (s. Figur 3) die links stehenden Sensordaten SD misst, die genaue Position dem Roboters aber nicht bekannt ist. Dies tritt z.B. auf, wenn der Roboter im Raum positioniert worden ist. Dieser Zustand kann aber auch Voraussetzung für die normale Navigation entlang einer Trajektorie T sein, um zu überprüfen, ob der Roboter 1 von der Trajektorie T abweicht.

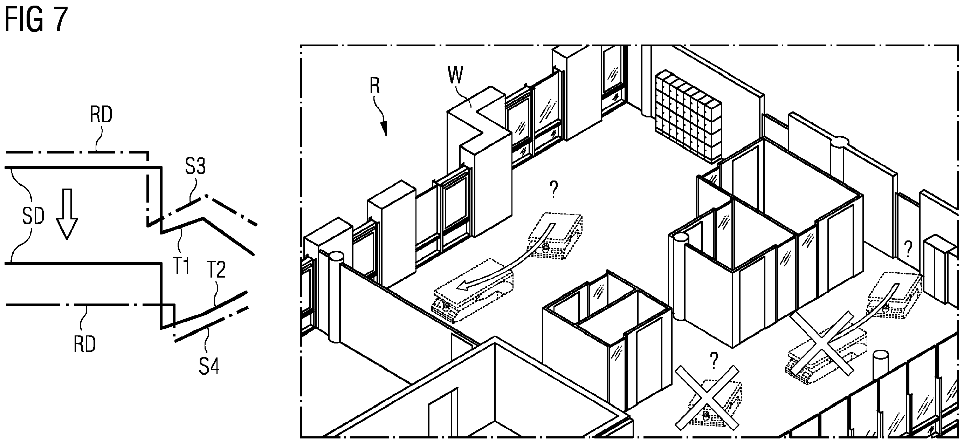

Zur besseren Verdeutlichung des Prinzips sind in dem Raum R drei weit voneinander abweichende Positionen mit gestrichelt gezeichneten Robotern mit Fragezeichen besetzt. In der Praxis werden diese Positionen nahe beieinander sein, da das Verfahren in der Regel in der Nähe der Trajektorie T stattfindet. Anhand der Sensordaten SD wurde hier diejenige Position im Raum R ermittelt, an der diese Sensordaten SD gemessen worden sein könnten. Dies kann beispielsweise mittels Anpassung der Kontur der gemessenen Sensordaten SD an eine Kontur von Referenzdaten RD geschehen, wie im Rahmen der Figur 7 genauer erklärt wird. Anhand der gemessenen Sensordaten SD ist in der Regel noch nicht klar, wo sich der Roboter 1 genau befindet, da es mehrere Möglichkeiten geben kann wie in diesem Beispiel gezeigt.

Mittels einer Grobjustage, z.B. durch Nutzung eines GPS-Signals, könnte der Roboter 1 nun feststellen, wo genau er sich befindet. Es können aber auch zusätzliche Sensorinformationen verwendet werden, z.B. ein rückwärtiger Sensor), um Möglichkeiten auszuschließen. Er kann jedoch auch eine bevorzugte Ausführungsform des erfindungsgemäßen Verfahrens nutzen, welche in Figur 7 dargestellt ist.

Figur 7 zeigt das Szenario von Figur 6, bei dem sich der Roboter 1 ein kleines Stück bewegt hat (Pfeil). Die Sensordaten SD können dabei die Grenzen der Bewegung vorgeben. Nun existieren zwei Testsätze T1, T2 von Sensordaten SD, die eine Historie aufzeichnen und die mit Referenzdaten verglichen werden können. Wie man links von der Darstellung des Raumes aus der Aufzeichnung der Konturen der Sensordaten entnahmen kann, stimmen sie sehr gut mit Konturen zweier Sätze S3, S4 von Referenzdaten RD überein. Die links unten angedeutete Position fällt weg, da sich der Roboter 1 nicht so weit bewegen könnte, Die Position rechts unten fällt weg, da der zweite Testsatz T2 der Sensordaten SD nicht mehr mit den Referenzdaten RD übereinstimmen würde. Somit bleibt als mögliche Position für den Roboter 1 die obere Position übrig.

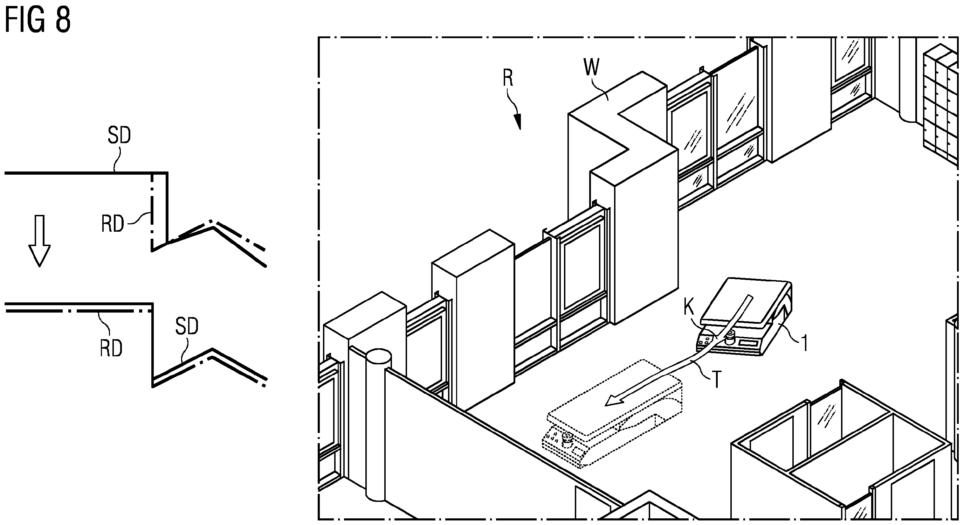

Figur 8 zeigt ein Szenario, bei dem ein Abweichen der Bewegung eines Roboters 1 von einer Trajektorie T verhindert wird. Weichen zu einem Zeitpunkt Sensordaten SD von den zu erwartenden Referenzdaten RD ab (links oben neben dem Bild des Raumes R dargestellt), so wird ein Korrekturvektor K ermittelt, auf dem sich der Roboter 1 bewegen muss, damit die Sensordaten SD wieder mit den Referenzdaten RD übereinstimmen.

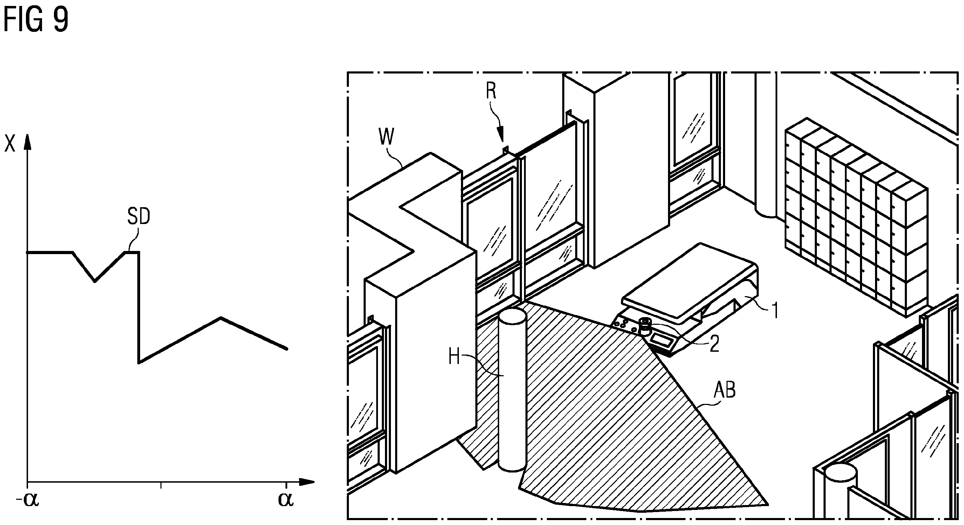

Figur 9 zeigt ein Szenario vergleichbar mit Figur 3 mit dem Unterschied, dass sich nun ein zusätzliches Hindernis H in Form einer Säule vor dem Roboter 1 befindet. Die Sensordaten SD, die links abgebildet sind, weisen demzufolge in dem horizontalen Teil eine Signatur des Hindernisses H auf, die als "Ecke" angedeutet ist.

In diesem Fall kann der Roboter 1 einfach neu trainiert werden, die (dauerhafte) Veränderung automatisch in die Referenzdaten RD aufgenommen werden oder der Roboter 1 abgeschaltet werden und ein Notsignal senden, wenn er sich gerade auf der Suche nach seiner Trajektorie T (s. Figur 5) befindet.

Es wird abschließend noch einmal darauf hingewiesen, dass es sich bei den vorhergehend detailliert beschriebenen Verfahren sowie bei dem dargestellten Roboter 1 lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" und "Modul" nicht aus, dass die betreffenden Komponenten aus mehreren zusammenwirkenden Teil-Komponenten bestehen, die gegebenenfalls auch räumlich verteilt sein können.

## Patentansprüche

1. Verfahren zur Steuerung eines mobilen Roboters (1) in einem Raum (R), umfassend die Schritte:
- Bereitstellung oder Erzeugung eines Bewegungsdatensatzes (BD) für den Roboter (1) umfassend Positionsdaten (PD) einer Trajektorie (T), und Geschwindigkeitsdaten (GD) eines Geschwindigkeitsprofils mit dem sich der Roboter (1) entlang der Trajektorie (T) bewegen soll,
- Positionierung des Roboters (1) in dem Raum (R), wobei der Roboter (1) eine Sensoreinheit (2) umfasst, die dazu ausgelegt ist, einen Parameter des Raumes (R) zu messen,
- Bereitstellung oder Erzeugung von Referenzdaten (RD) umfassend Informationen zu Sensordaten (SD), wie sie von der Sensoreinheit (2) bei Bewegung des Roboters (1) mit dem Geschwindigkeitsprofil des Bewegungsdatensatzes (BD) entlang der Trajektorie (T) aufgenommen würden,
- Aufnahme von Sensordaten (SD) mittels einer Sensoreinheit (2) des Roboters (1),
- Berechnung eines Korrekturvektors (KV) aus dem Unterschied von Sensordaten (SD) und Referenzdaten (RD),
- Bewegung des Roboters (1) entlang des Korrekturvektors (KV) und/oder zur nächsten durch die Positionsdaten (PD) definierten Position der Trajektorie (T),
- Wiederholung der Aufnahme von Sensordaten (SD), der Berechnung eines Korrekturvektors (KV) und der Bewegung des Roboters (1).

2. Verfahren nach Anspruch 1, wobei die Bereitstellung oder Erzeugung des Bewegungsdatensatzes (BD) für den Roboter (1) mittels eines Teach-In erreicht wird, wobei der Bewegungsdatensatz (BD) bevorzugt durch Führung des Roboters (1) entlang einer Trajektorie (T) erzeugt wird.

3. Verfahren nach einem der vorangehenden Ansprüche, wobei der Bewegungsdatensatz (BD) zusätzlich Beschleunigungsdaten zu einem Beschleunigungsprofil umfasst, mit dem sich der Roboter (1) entlang der Trajektorie (T) bewegen soll.

4. Verfahren nach einem der vorangehenden Ansprüche, wobei im Rahmen der Bereitstellung oder Erzeugung von Referenzdaten (RD) eine Aufnahme und Speicherung von Sensordaten (SD) als Referenzdaten (RD) erfolgt, insbesondere während einer Führung des Roboters (1) entlang der Trajektorie (T).

5. Verfahren nach einem der vorangehenden Ansprüche, wobei im Rahmen der Aufnahme von Sensordaten (SD) Forminformationen über Konturen der Umgebung des Roboters (1) und/oder Bildinformationen über die Umgebung des Roboters (1) aufgenommen werden,
bevorzugt Forminformationen über Konturen von raumbegrenzenden Elementen und/oder Bildinformationen zu Markern.

6. Verfahren nach einem der vorangehenden Ansprüche, wobei im Rahmen der Aufnahme von Sensordaten (SD) weitere Messdaten durch Sensoren des Roboters (1) aufgenommen werden, die anderer Natur sind als die Referenzdaten (RD) und diese Messdaten bevorzugt zur Ermittlung einer Ist-Position des Roboters (1) verwendet werden.

7. Verfahren nach einem der vorangehenden Ansprüche, wobei im Rahmen der Berechnung eines Korrekturvektors (KV) eine Ist-Position des Roboters (1) ermittelt wird und im Rahmen einer nachfolgenden Wiederholung ein Vergleich der Sensordaten (SD) mit Referenzdaten (RD) durchgeführt wird, welche mit dem nächstgelegenen Abschnitt der Trajektorie (T) zu der Ist-Position verknüpft sind,
und/oder wobei zeitlich früher im Rahmen des Verfahrens aufgenommene Sensordaten (SD) ebenfalls zur Berechnung des Korrekturvektors (KV) verwendet werden.

8. Verfahren nach einem der vorangehenden Ansprüche, wobei die Sensordaten (SD) auf das Vorliegen einer Änderung der Struktur des Raumes (R) überprüft werden und im positiven Fall bevorzugt Sensordaten (SD), die an einem Punkt der Trajektorie (T) aufgenommen wurden, als neue mit den entsprechenden Positionsdaten an diesem Punkt der Trajektorie (T) verknüpfte Referenzdaten (RD) abgespeichert werden.

9. Verfahren nach einem der vorangehenden Ansprüche, wobei im Rahmen der Wiederholung der Schritte des erfindungsgemäßen Verfahrens der Roboter (1) zunächst versucht, sich mit der vorgegebenen Trajektorie (T) zu synchronisieren und in dem Falle, dass der Roboter (1) die Trajektorie (T) erreicht hat, die Referenzdaten (RD) bevorzugt in ihrer Abfolge entlang der Trajektorie (T) abgerufen und als jeweils neue Sollwerte zur Berechnung eines Korrekturvektors (KV) verwendet werden.

10. Roboter (1) ausgelegt zur Durchführung eines Verfahrens gemäß einem der vorangehenden Ansprüche, umfassend:
- eine Datenspeichereinheit (3) zur Aufnahme eines Bewegungsdatensatzes (BD) für den Roboter (1) umfassend Positionsdaten (PD) einer Trajektorie (T), und Geschwindigkeitsdaten (GD) eines Geschwindigkeitsprofils mit dem sich der Roboter (1) entlang der Trajektorie (T) bewegen soll,
- eine Sensoreinheit (2), die dazu ausgelegt ist, einen Parameter des Raumes (R) zu messen und Sensordaten (SD) aufzunehmen,
- eine Datenspeichereinheit (3) zur Aufnahme von Referenzdaten (RD) umfassend Informationen zu Sensordaten (SD), wie sie von der Sensoreinheit (2) bei Bewegung des Roboters (1) mit dem Geschwindigkeitsprofil des Bewegungsdatensatzes (BD) entlang der Trajektorie (T) aufgenommen würden,
- eine Steuereinheit (4) ausgelegt zur Berechnung eines Korrekturvektors (KV) aus dem Unterschied von Sensordaten (SD) und Referenzdaten (RD),
- eine Bewegungseinheit (5) ausgelegt zur Bewegung des Roboters (1) entlang des Korrekturvektors (KV) und/oder zur nächsten durch die Positionsdaten (PD) definierten Position der Trajektorie (T).

11. Roboter nach Anspruch 10, umfassend eine Datenschnittstelle (8) zur Kommunikation mit einer Steuerkonsole (9) und ausgelegt zur Programmierung mittels eines Teach-In.

12. Roboter nach Anspruch 10 oder 11, wobei die Sensoreinheit (2) dazu ausgelegt ist, einen Parameter des Raumes (R) zu messen, der den Zustand der Umgebung der Position des Roboters (1) wiedergibt und/oder einen Parameter mit im Raum (R) inhomogenen Werten wiedergibt, und/oder wobei die Sensoreinheit (2) dazu ausgelegt ist, einen Parameter zu messen, der sich bei Bewegung des Roboters (1) ändert und insbesondere ebenfalls ändert, wenn der Raum (R) eine Änderung erfährt, wobei die Sensoreinheit (2) besonders bevorzugt dazu ausgelegt ist, Forminformationen über Konturen der Umgebung des Roboters (1) als Sensordaten (SD) anzugeben.

13. Roboter nach einem der Ansprüche 10 bis 12, wobei die Sensoreinheit (2) mindestens einen Sensor der Gruppe Abstandssensoren, Kameras, Sensoren zur Funktriangulation, 3D-Laserscanner, Sensoren zum optischen Feature-Tracking und Sensoren zur Magnetfeldmessung umfasst.

14. Computerprogrammprodukt mit einem Computerprogramm, welches direkt in eine Datenspeichereinheit (3) eines Roboters (1) ladbar ist, mit Programmabschnitten, um alle Schritte des Verfahrens nach einem der Ansprüche 1 bis 9 auszuführen, wenn das Computerprogramm in einer Steuereinheit (4) des Roboters (1) ausgeführt wird.

15. Computerlesbares Medium, auf welchem von einer Rechnereinheit einlesbare und ausführbare Programmabschnitte gespeichert sind, um alle Schritte des Verfahrens nach einem der Ansprüche 1 bis 9 auszuführen, wenn die Programmabschnitte von der Rechnereinheit ausgeführt werden.
